# EUROPEAN PATENT APPLICATION

(11) **EP 4 629 345 A1**
(43) Date of publication of application: **08.10.2025**
(21) Application number: 23897735.9
(22) Date of filing: 27.11.2023
(51) Int. Cl.: H01M 4/62, H01M 4/139

(54) **BINDER COMPOSITION FOR NONAQUEOUS SECONDARY BATTERY ELECTRODES, SLURRY COMPOSITION FOR NONAQUEOUS SECONDARY BATTERY ELECTRODES, ELECTRODE FOR NONAQUEOUS SECONDARY BATTERIES, AND NONAQUEOUS SECONDARY BATTERY**

(30) Priority: 30.11.2022 JP 2022192172
(71) Applicant: Zeon Corporation, Tokyo 100-8246 (JP)
(72) Inventor: SHINTANI, Akihiro, Tokyo 100-8246 (JP)
(74) Representative: Maiwald GmbH
(86) International application number: PCT/JP2023/042396
(87) International publication number: WO 2024/117087

(57) **Abstract**

A binder composition for a non-aqueous secondary battery electrode contains a polymer and a solvent. In a situation in which the binder composition for a non-aqueous secondary battery electrode is subjected to filtration using a mesh filter having an opening size of 5 µm, the number of particles having a maximum diameter of not less than 5 µm and not more than 15 µm that are observed on the mesh filter after the filtration is 2,000 particles/L or less, and the proportion of the number of particles having a maximum diameter of more than 15 µm relative to the total number of particles that are observed on the mesh filter after the filtration is 40% or less.

## Description

### TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher secondary battery performance.

An electrode for a lithium ion secondary battery, for example, generally includes a current collector and an electrode mixed material layer formed on the current collector. The electrode mixed material layer is formed by, for example, applying a slurry composition obtained through mixing of an electrode active material, a binder composition containing a binder and a solvent, and so forth onto the current collector, and drying the slurry composition so as to bind the electrode active material, etc. through the binder.

Improvements have previously been made in order to reduce contaminants such as metal particles and non-metal particles that are contained in binder compositions used to form electrode mixed material layers.

As one example, Patent Literature (PTL) 1 discloses, as a binder for a secondary battery electrode, a binder in which the content of metal-based particles of not smaller than 10 µm and not larger than 100 µm is 10 × 10³ particles or less per 1 g of a cross-linked polymer or salt thereof.

As another example, PTL 2 discloses performing filtration treatment of a diene polymer particle water dispersion or an acrylic polymer particle water dispersion using a stainless steel screen and a cartridge filtration filter to obtain a binder composition for an electrode having a concentration of 370 ppm to 2,000 ppm of coarse particles and/or aggregates that have been produced through a production process of the diene polymer particle water dispersion or the acrylic polymer particle water dispersion and that are a fine coagulated material in which the volume-equivalent diameter of particles measured by the Coulter method is 3 µm or more.

As another example, PTL 3 proposes a method of producing a binder composition for a secondary battery that includes a particulate metal removal step of magnetically removing a particulate metal component formed of one or more metals selected from the group consisting of Fe, Ni, and Cr from a polymer dispersion liquid that contains a polymer, a dispersion medium, and the particulate metal component. PTL 3 discloses that the removal is performed until the content of a particulate metal component having a particle diameter of 20 µm or more is 10 ppm or less in the particulate metal removal step.

As yet another example, PTL 4 discloses an aqueous binder composition for a lithium secondary battery with which particles trapped on a stainless steel screen having an opening size of 20 µm have a volume-equivalent diameter of 20 µm or more.

### CITATION LIST

### Patent Literature

PTL 1: WO2020/090694A1
PTL 2: JP5696826B2
PTL 3: JP4687833B2
PTL 4: JP6327253B2

### SUMMARY

### (Technical Problem)

It is desirable for a slurry composition that is produced using a binder composition to have excellent coatability. By ensuring that a slurry composition has sufficiently high coatability, it is possible to inhibit the formation of craters on an electrode mixed material layer due to coating defects when the slurry composition is applied onto a current collector to form an electrode mixed material layer.

Moreover, it is also desirable that a secondary battery that includes an electrode formed using a slurry composition has excellent cycle characteristics at low temperature (hereinafter, also referred to as "low-temperature cycle characteristics").

However, binder compositions of the prior art described above leave room for improvement of coatability of a produced slurry composition and low-temperature cycle characteristics of a secondary battery that includes an electrode formed using the slurry composition.

Accordingly, one object of the present disclosure is to provide a binder composition for a non-aqueous secondary battery electrode that is capable of producing a slurry composition for a non-aqueous secondary battery electrode having excellent coatability and that is capable of forming an electrode for a non-aqueous secondary battery that can cause a non-aqueous secondary battery to display excellent low-temperature cycle characteristics.

Another object of the present disclosure is to provide a slurry composition for a non-aqueous secondary battery electrode that has excellent coatability and that is capable of forming an electrode for a non-aqueous secondary battery that can cause a non-aqueous secondary battery to display excellent low-temperature cycle characteristics.

Another object of the present disclosure is to provide an electrode for a non-aqueous secondary battery that can cause a non-aqueous secondary battery to display excellent low-temperature cycle characteristics.

Another object of the present disclosure is to provide a non-aqueous secondary battery that has excellent low-temperature cycle characteristics.

### (Solution to Problem)

The inventor made extensive studies to achieve the foregoing objects. The inventor discovered that with regards to a binder composition containing a polymer and a solvent, by setting the number of particles having a maximum diameter of not less than 5 µm and not more than 15 µm that are observed on a mesh filter after filtration as not more than a specific value and by setting the proportion of the number of particles having a maximum diameter of more than 15 µm relative to the total number of particles that are observed on a mesh filter after filtration as not more than a specific value in a situation in which the binder composition is subjected to filtration using a mesh filter having an opening size of 5 µm or more, a slurry composition that is produced using the binder composition has excellent coatability, and a secondary battery that includes an electrode formed using the slurry composition can display excellent low-temperature cycle characteristics. In this manner, the inventor completed the present disclosure.

Specifically, with the aim of advantageously solving the problems set forth above, [1] a presently disclosed binder composition for a non-aqueous secondary battery electrode comprises a polymer and a solvent, wherein, in a situation in which the binder composition for a non-aqueous secondary battery electrode is subjected to filtration using a mesh filter having an opening size of 5 µm, a number of particles having a maximum diameter of not less than 5 µm and not more than 15 µm that are observed on the mesh filter after the filtration is 2,000 particles/L or less, and a proportion of a number of particles having a maximum diameter of more than 15 µm relative to a total number of particles that are observed on the mesh filter after the filtration is 40% or less.

Through the presently disclosed binder composition, it is possible to produce a slurry composition that has excellent coatability and to form an electrode that can cause a secondary battery to display excellent low-temperature cycle characteristics.

Note that the number of particles [particles/L] having a maximum diameter of not less than 5 µm and not more than 15 µm that are observed on a mesh filter after filtration and the proportion [%] of the number of particles having a maximum diameter of more than 15 µm relative to the total number of particles that are observed on a mesh filter after filtration in a situation in which a binder composition is subjected to filtration using a mesh filter having an opening size of 5 µm or more can be measured by a method described in the EXAMPLES section of the present specification.

**[2]** In the binder composition for a non-aqueous secondary battery electrode according to the foregoing [1], it is preferable that a number of non-metal particles having a maximum diameter of not less than 5 µm and not more than 15 µm that are observed on the mesh filter after the filtration is 2,000 particles/L or less, and a proportion of a number of non-metal particles having a maximum diameter of more than 15 µm relative to a total number of non-metal particles that are observed on the mesh filter after the filtration is 40% or less.

When the number of non-metal particles having a maximum diameter of not less than 5 µm and not more than 15 µm that are observed on a mesh filter after filtration is not more than the specific value set forth above and the proportion of the number of non-metal particles having a maximum diameter of more than 15 µm relative to the total number of non-metal particles that are observed on a mesh filter after filtration is not more than the specific value set forth above in a situation in which the binder composition is subjected to filtration using a mesh filter having an opening size of 5 µm or more, coatability of a slurry composition that is produced using the binder composition can be further improved, and low-temperature cycle characteristics of a secondary battery that includes an electrode formed using the slurry composition can also be further improved. Moreover, viscosity stability of the slurry composition can also be improved.

Note that the number of non-metal particles [particles/L] having a maximum diameter of not less than 5 µm and not more than 15 µm that are observed on a mesh filter after filtration and the proportion [%] of the number of non-metal particles having a maximum diameter of more than 15 µm relative to the total number of non-metal particles that are observed on a mesh filter after filtration in a situation in which a binder composition is subjected to filtration using a mesh filter having an opening size of 5 µm or more can be measured by a method described in the EXAMPLES section of the present specification.

[3] In the binder composition for a non-aqueous secondary battery electrode according to the foregoing [1] or [2], the solvent preferably includes water.

Moreover, with the aim of advantageously solving the problems set forth above, [4] a presently disclosed slurry composition for a non-aqueous secondary battery electrode comprises: an electrode active material; and the binder composition for a non-aqueous secondary battery electrode according to any one of the foregoing [1] to [3].

The presently disclosed slurry composition has excellent coatability and is capable of forming an electrode that can cause a secondary battery to display excellent low-temperature cycle characteristics as a result of the presently disclosed slurry composition containing the presently disclosed binder composition set forth above.

Furthermore, with the aim of advantageously solving the problems set forth above, [5] a presently disclosed electrode for a non-aqueous secondary battery comprises an electrode mixed material layer formed using the slurry composition for a non-aqueous secondary battery electrode according to the foregoing [4].

The presently disclosed electrode can cause a secondary battery to display excellent low-temperature cycle characteristics as a result of being formed using the presently disclosed slurry composition set forth above.

Also, with the aim of advantageously solving the problems set forth above, [6] a presently disclosed non-aqueous secondary battery comprises the electrode for a non-aqueous secondary battery according to the foregoing [5].

The presently disclosed secondary battery can display excellent low-temperature cycle characteristics as a result of including the presently disclosed electrode set forth above.

### (Advantageous Effect)

According to the present disclosure, it is possible to provide a binder composition for a non-aqueous secondary battery electrode that is capable of producing a slurry composition for a non-aqueous secondary battery electrode having excellent coatability and that is capable of forming an electrode for a non-aqueous secondary battery that can cause a non-aqueous secondary battery to display excellent low-temperature cycle characteristics.

Moreover, according to the present disclosure, it is possible to provide a slurry composition for a non-aqueous secondary battery electrode that has excellent coatability and that is capable of forming an electrode for a non-aqueous secondary battery that can cause a non-aqueous secondary battery to display excellent low-temperature cycle characteristics.

Furthermore, according to the present disclosure, it is possible to provide an electrode for a non-aqueous secondary battery that can cause a non-aqueous secondary battery to display excellent low-temperature cycle characteristics.

Also, according to the present disclosure, it is possible to provide a non-aqueous secondary battery that has excellent low-temperature cycle characteristics.

### DETAILED DESCRIPTION

The following provides a detailed description of embodiments of the present disclosure.

The presently disclosed binder composition for a non-aqueous secondary battery electrode can be used in production of the presently disclosed slurry composition for a non-aqueous secondary battery electrode. Moreover, a slurry composition for a non-aqueous secondary battery electrode that has been produced using the presently disclosed binder composition for a non-aqueous secondary battery electrode can be used in production of an electrode of a non-aqueous secondary battery such as a lithium ion secondary battery. Furthermore, a feature of the presently disclosed non-aqueous secondary battery is that it includes the presently disclosed electrode for a non-aqueous secondary battery formed using the presently disclosed slurry composition for a non-aqueous secondary battery electrode.

Note that the presently disclosed binder composition for a non-aqueous secondary battery electrode and slurry composition for a non-aqueous secondary battery electrode are preferably for a negative electrode. Moreover, the presently disclosed electrode for a non-aqueous secondary battery is preferably a negative electrode. Furthermore, the presently disclosed non-aqueous secondary battery is preferably a non-aqueous secondary battery that includes the presently disclosed electrode for a non-aqueous secondary battery as at least a negative electrode.

### (Binder composition for non-aqueous secondary battery electrode)

The presently disclosed binder composition contains a polymer and a solvent, and may optionally further contain components other than the polymer and the solvent (i.e., other components).

A feature of the presently disclosed binder composition is that in a situation in which the binder composition is subjected to filtration using a mesh filter having an opening size of 5 µm or more: (1) the number of particles having a maximum diameter of not less than 5 µm and not more than 15 µm that are observed on the mesh filter after the filtration is not more than a specific value; and (2) the proportion of the number of particles having a maximum diameter of more than 15 µm relative to the total number of particles that are observed on the mesh filter after the filtration is not more than a specific value.

Particles that are trapped on a mesh filter in a situation in which the binder composition is subjected to filtration using a mesh filter having an opening size of 5 µm or more are presumed to be capable of having a negative influence as contaminants with respect to coatability of a slurry composition that is produced using the binder composition and low-temperature cycle characteristics of a secondary battery that includes an electrode formed using the slurry composition. However, it is not clear from the prior art which particles in terms of characteristics should be targeted for control among those that are trapped on the mesh filter and in what manner these particles should be controlled in order to improve coatability of a slurry composition and low-temperature cycle characteristics of a secondary battery.

Studies conducted by the inventor in response to this problem revealed that coatability of a slurry composition and low-temperature cycle characteristics of a secondary battery improve in a situation in which a binder composition satisfies both of conditions (1) and (2) set forth above.

### <Number of particles, etc.>

In a situation in which the presently disclosed binder composition is subjected to filtration using a mesh filter having an opening size of 5 µm, the number of particles having a maximum diameter of not less than 5 µm and not more than 15 µm that are observed on the mesh filter after the filtration is required to be 2,000 particles/L or less, and is preferably 1,500 particles/L or less, more preferably 1,000 particles/L or less, even more preferably 500 particles/L or less, further preferably 100 particles/L or less, and even further preferably 50 particles/L or less.

When the number of particles having a maximum diameter of not less than 5 µm and not more than 15 µm that are observed on the mesh filter after the filtration is not more than any of the upper limits set forth above, coatability of a slurry composition that is produced using the binder composition can be sufficiently improved, and low-temperature cycle characteristics of a secondary battery that includes an electrode formed using the slurry composition can be sufficiently improved. Moreover, when the number of particles having a maximum diameter of not less than 5 µm and not more than 15 µm that are observed on the mesh filter after the filtration is not more than any of the upper limits set forth above, viscosity stability of a slurry composition can also be improved.

Note that the lower limit for the number of particles having a maximum diameter of not less than 5 µm and not more than 15 µm that are observed on the mesh filter after the filtration is not specifically limited and may be 0 particles/L or more, may be 10 particles/L or more, or may be 20 particles/L or more, for example.

The number of particles having a maximum diameter of not less than 5 µm and not more than 15 µm that are observed on the mesh filter after the filtration can be controlled through a contaminant removal means in a subsequently described production method of the binder composition.

Moreover, in a situation in which the presently disclosed binder composition is subjected to filtration using a mesh filter having an opening size of 5 µm, the proportion of the number of particles having a maximum diameter of more than 15 µm relative to the total number of particles that are observed on the mesh filter after the filtration is required to be 40% or less, and is preferably 35% or less, more preferably 30% or less, even more preferably 25% or less, further preferably 20% or less, and even further preferably 15% or less.

When the proportion of the number of particles having a maximum diameter of more than 15 µm relative to the total number of particles that are observed on the mesh filter after the filtration is not more than any of the upper limits set forth above, coatability of a slurry composition that is produced using the binder composition can be sufficiently improved, and low-temperature cycle characteristics of a secondary battery that includes an electrode formed using the slurry composition can be sufficiently improved.

Note that the lower limit for the proportion of the number of particles having a maximum diameter of more than 15 µm relative to the total number of particles that are observed on the mesh filter after the filtration is not specifically limited and may be 0% or more, may be 1% or more, or may be 2% or more, for example.

The proportion of the number of particles having a maximum diameter of more than 15 µm relative to the total number of particles that are observed on the mesh filter after the filtration can be controlled through a contaminant removal means in a subsequently described production method of the binder composition.

The value of a parameter 1 (A1 × B1) that is calculated through multiplication of (1) the number of particles (A1) having a maximum diameter of not less than 5 µm and not more than 15 µm that are observed on the mesh filter after the filtration and (2) the proportion (B1) of the number of particles having a maximum diameter of more than 15 µm relative to the total number of particles that are observed on the mesh filter after the filtration is preferably 48,000 or less, more preferably 30,000 or less, and even more preferably 15,000 or less. When the value of the parameter 1 (A1 × B1) is not more than any of the upper limits set forth above, viscosity stability of a slurry composition and low-temperature cycle characteristics can be even further enhanced. Note that the lower limit for the parameter 1 (A1 × B1) is not specifically limited and can be 1,000 or more.

No specific limitations are placed on the origin of particles that are observed on a mesh filter after filtration in a situation in which the presently disclosed binder composition is subjected to filtration using a mesh filter having an opening size of 5 µm. For example, the particles may be contaminants originating from a raw material used in production of the subsequently described polymer, contaminants formed through a polymerization reaction in production of the subsequently described polymer, an inner wall of equipment such as a vessel or pipe used for producing the binder composition, dirt that was attached to the inner wall of the equipment, or the like.

Moreover, the particles that are observed on the mesh filter after the filtration can include both metal particles (i.e., particles that contain a metal material) and non-metal particles (i.e., particles other than metal particles).

### <<Number of non-metal particles, etc.>>

In a situation in which the presently disclosed binder composition is subjected to filtration using a mesh filter having an opening size of 5 µm, the number of non-metal particles having a maximum diameter of not less than 5 µm and not more than 15 µm that are observed on the mesh filter after the filtration is preferably 2,000 particles/L or less, more preferably 1,500 particles/L or less, even more preferably 1,000 particles/L or less, further preferably 500 particles/L or less, even further preferably 100 particles/L or less, and particularly preferably 50 particles/L or less.

When the number of non-metal particles having a maximum diameter of not less than 5 µm and not more than 15 µm that are observed on the mesh filter after the filtration is not more than any of the upper limits set forth above, coatability of a slurry composition that is produced using the binder composition can be further improved, and low-temperature cycle characteristics of a secondary battery that includes an electrode formed using the slurry composition can be further improved. Moreover, when the number of non-metal particles having a maximum diameter of not less than 5 µm and not more than 15 µm that are observed on the mesh filter after the filtration is not more than any of the upper limits set forth above, viscosity stability of a slurry composition can also be further improved.

Note that the lower limit for the number of non-metal particles having a maximum diameter of not less than 5 µm and not more than 15 µm that are observed on the mesh filter after the filtration is not specifically limited and may be 0 particles/L or more, may be 10 particles/L or more, or may be 20 particles/L or more, for example.

The number of non-metal particles having a maximum diameter of not less than 5 µm and not more than 15 µm that are observed on the mesh filter after the filtration can be controlled through a contaminant removal means in a subsequently described production method of the binder composition.

Moreover, in a situation in which the presently disclosed binder composition is subjected to filtration using a mesh filter having an opening size of 5 µm, the proportion of the number of non-metal particles having a maximum diameter of more than 15 µm relative to the total number of non-metal particles that are observed on the mesh filter after the filtration is preferably 40% or less, more preferably 35% or less, even more preferably 30% or less, further preferably 25% or less, even further preferably 20% or less, and particularly preferably 15% or less.

When the proportion of the number of non-metal particles having a maximum diameter of more than 15 µm relative to the total number of non-metal particles that are observed on the mesh filter after the filtration is not more than any of the upper limits set forth above, coatability of a slurry composition that is produced using the binder composition can be further improved, and low-temperature cycle characteristics of a secondary battery that includes an electrode formed using the slurry composition can be further improved.

Note that the lower limit for the proportion of the number of non-metal particles having a maximum diameter of more than 15 µm relative to the total number of non-metal particles that are observed on the mesh filter after the filtration is not specifically limited and may be 0% or more, may be 1% or more, or may be 2% or more, for example.

The proportion of the number of non-metal particles having a maximum diameter of more than 15 µm relative to the total number of non-metal particles that are observed on the mesh filter after the filtration can be controlled through a contaminant removal means in a subsequently described production method of the binder composition.

The value of a parameter 2 (A2 × B2) that is calculated through multiplication of (1') the number of non-metal particles (A2) having a maximum diameter of not less than 5 µm and not more than 15 µm that are observed on the mesh filter after the filtration and (2') the proportion (B2) of the number of non-metal particles having a maximum diameter of more than 15 µm relative to the total number of non-metal particles that are observed on the mesh filter after the filtration is preferably 48,000 or less, more preferably 30,000 or less, and even more preferably 15,000 or less. When the value of the parameter 2 (A2 × B2) is not more than any of the upper limits set forth above, viscosity stability of a slurry composition and low-temperature cycle characteristics can be even further enhanced. Note that the lower limit for the parameter 2 (A2 × B2) is not specifically limited and can be 1,000 or more.

### <<Number of metal particles, etc.>>

In a situation in which the presently disclosed binder composition is subjected to filtration using a mesh filter having an opening size of 5 µm, the number of metal particles having a maximum diameter of not less than 5 µm and not more than 15 µm that are observed on the mesh filter after the filtration is preferably 10 particles/L or less, more preferably 5 particles/L or less, even more preferably 2 particles/L or less, and further preferably 1 particle/L or less.

When the number of metal particles having a maximum diameter of not less than 5 µm and not more than 15 µm that are observed on the mesh filter after the filtration is not more than any of the upper limits set forth above, coatability of a slurry composition that is produced using the binder composition can be further improved, and low-temperature cycle characteristics of a secondary battery that includes an electrode formed using the slurry composition can be further improved.

Note that the number of metal particles having a maximum diameter of not less than 5 µm and not more than 15 µm that are observed on the mesh filter after the filtration is not specifically limited but should be 0 particles/L or more, and may be 0 particles/L.

The number of metal particles having a maximum diameter of not less than 5 µm and not more than 15 µm that are observed on the mesh filter after the filtration can be controlled through a contaminant removal means in a subsequently described production method of the binder composition.

### <Polymer>

No specific limitations are placed on the polymer so long as it has a function as a binder (i.e., has binding capacity), and any polymer that can be used as a binder can be used. For example, polyethylene, polypropylene, acid-modified polyolefin, a vinyl fluoride polymer, a hydroxy group-containing olefin polymer, an acrylic acid polymer, an acrylic polymer, an acrylonitrile polymer, a diene polymer, a silicon-containing polymer, or the like can be used. One of these polymers may be used individually, or two or more of these polymers may be used in combination. Of these polymers, it is preferable to use a diene polymer in a case in which the binder composition is to be used to form a negative electrode mixed material layer, for example.

### <<Diene polymer>>

The following describes the chemical composition of a diene polymer that is suitable as the polymer. The diene polymer includes an aliphatic conjugated diene monomer unit. Moreover, the diene polymer can optionally further include monomer units other than an aliphatic conjugated diene monomer unit (i.e., other monomer units).

Note that when a polymer is said to "include a monomer unit" in the present disclosure, this means that "a polymer obtained using that monomer includes a repeating unit derived from the monomer".

Also note that the proportional content of a "monomer unit" (repeating unit) in a polymer referred to in the present disclosure can be measured by a nuclear magnetic resonance (NMR) method such as ¹H-NMR.

### [Aliphatic conjugated diene monomer unit]

Examples of aliphatic conjugated diene monomers that can form an aliphatic conjugated diene monomer unit include 1,3-butadiene, 2-methyl-1,3-butadiene (isoprene), and 2,3-dimethyl-1,3-butadiene. One of these aliphatic conjugated diene monomers may be used individually, or two or more of these aliphatic conjugated diene monomers may be used in combination. Of these aliphatic conjugated diene monomers, 1,3-butadiene is preferable.

The proportional content of aliphatic conjugated diene monomer units in the diene polymer when all monomer units included in the diene polymer are taken to be 100 mass% is preferably 25 mass% or more, and more preferably 30 mass% or more, and is preferably 85 mass% or less, and more preferably 75 mass% or less.

### [Other monomer units]

The other monomer units may be monomer units derived from known monomers that are copolymerizable with an aliphatic conjugated diene monomer such as described above. Examples of such monomers include aromatic vinyl monomers, nitrile group-containing monomers, (meth)acrylic acid ester monomers, carboxy group-containing monomers, amide group-containing monomers, and hydroxyalkyl group-containing monomers. One of these monomers may be used individually, or two or more of these monomers may be used in combination. Of these monomers, aromatic vinyl monomers, carboxy group-containing monomers, and hydroxyalkyl group-containing monomers are preferable.

Examples of aromatic vinyl monomers that can form an aromatic vinyl monomer unit include styrene, α-methylstyrene, vinyltoluene, and divinylbenzene. One of these aromatic vinyl monomers may be used individually, or two or more of these aromatic vinyl monomers may be used in combination. Of these aromatic vinyl monomers, styrene is preferable.

The proportional content of aromatic vinyl monomer units in the diene polymer when all monomer units included in the binder are taken to be 100 mass% is preferably 5 mass% or more, and more preferably 10 mass% or more, and is preferably 80 mass% or less, and more preferably 70 mass% or less.

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of these dicarboxylic acids and acid anhydrides.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

An acid anhydride that produces a carboxy group through hydrolysis can also be used as a carboxy group-containing monomer.

The proportional content of carboxy group-containing monomer units in the diene polymer when all monomer units included in the diene polymer are taken to be 100 mass% is preferably 0.05 mass% or more, and more preferably 0.1 mass% or more, and is preferably 10 mass% or less, and more preferably 5 mass% or less.

Examples of hydroxyalkyl group-containing monomers that can form a hydroxyalkyl group-containing monomer unit include hydroxymethyl acrylamide, hydroxyethyl acrylamide, hydroxypropyl acrylamide, hydroxymethyl methacrylamide, hydroxyethyl methacrylamide, hydroxypropyl methacrylamide, hydroxymethyl acrylate, hydroxyethyl acrylate, hydroxypropyl acrylate, hydroxybutyl acrylate, hydroxymethyl methacrylate, hydroxyethyl methacrylate, hydroxypropyl methacrylate, and hydroxybutyl methacrylate. One of these hydroxyalkyl group-containing monomers may be used individually, or two or more of these hydroxyalkyl group-containing monomers may be used in combination. Of these hydroxyalkyl group-containing monomers, hydroxyethyl acrylate is preferable.

Note that in the present disclosure, a monomer that includes both a hydroxyalkyl group and an amide group is considered to be included among hydroxyalkyl group-containing monomers and not be included among amide group-containing monomers.

The proportional content of hydroxyalkyl group-containing monomer units in the diene polymer when all monomer units included in the diene polymer are taken to be 100 mass% is preferably 0.05 mass% or more, and is preferably 5 mass% or less, more preferably 3 mass% or less, and even more preferably 2 mass% or less.

### <<Production method of polymer>>

No specific limitations are placed on the method by which the polymer is produced. The polymer can be produced by polymerizing a monomer composition containing the above-described monomers by a known method.

The proportion constituted by each monomer in the monomer composition is normally the same as the proportion constituted by each monomer unit in the target polymer. The method of polymerization of the polymer may be solution polymerization, suspension polymerization, bulk polymerization, emulsion polymerization, or the like, for example, without any specific limitations. Moreover, the polymerization reaction may be addition polymerization such as ionic polymerization, radical polymerization, or living radical polymerization. An emulsifier, dispersant, polymerization initiator, polymerization aid, or the like used in polymerization may be the same as typically used and the amount thereof may also be the same as typically used. In the polymerization, seed particles may be used to perform seeded polymerization.

### <<Properties of polymer>>

The polymer in the binder composition may be a particulate polymer. The particulate polymer is normally water-insoluble.

Note that when a polymer is said to be "water-insoluble" in the present disclosure, this means that when 0.5 g (in terms of solid content) of the polymer is dissolved in 100 g of water at a temperature of 25°C, the amount of insoluble content is 90 mass% or more.

In a case in which the polymer in the binder composition is a particulate polymer, the volume-average particle diameter of the particulate polymer is preferably 800 nm or less. When the volume-average particle diameter of the particulate polymer is not more than the upper limit set forth above, clogging of a filter or the like used in a subsequently described production method of the binder composition by the particulate polymer can be prevented, thereby enabling improvement of production efficiency of the binder composition.

The lower limit for the volume-average particle diameter of the particulate polymer is not specifically limited but is normally 100 nm or more.

Note that the "volume-average particle diameter" referred to in the present disclosure means the particle diameter D50 at which, in a particle diameter distribution by volume measured by laser diffraction/scattering, cumulative volume calculated from a small diameter end of the distribution reaches 50%.

Alternatively, the polymer in the binder composition may be a water-soluble polymer.

Note that when a polymer is said to be "water-soluble" in the present disclosure, this means that when 0.5 g (in terms of solid content) of the polymer is dissolved in 100 g of water at a temperature of 25°C, the amount of insoluble content is less than 5.0 mass%.

It should be noted that the presently disclosed binder composition may contain just one of a particulate polymer and a water-soluble polymer as the polymer or may contain both a particulate polymer and a water-soluble polymer as the polymer.

### <Solvent>

Any known solvent in which the above-described polymer can be dissolved or dispersed can be used as the solvent. Although water or an organic solvent can be used as the solvent, it is preferable to use water. Note that a solvent such as water that was used in production of the above-described polymer can be used as at least a portion of the solvent that is contained in the binder composition.

### <Other components>

No specific limitations are placed on components other than the above-described polymer and solvent that can be contained in the binder composition, and known additives that can be compounded in binder compositions may be used, for example. One of these other components can be used individually, or two or more of these other components can be used in combination.

Examples of additives that may be used include, but are not specifically limited to, defoamers, preservatives, and so forth.

The defoamer may be a silicone-based defoamer, a mineral oil-based defoamer (modified hydrocarbon oil having mineral oil as a base), or a polymer-based defoamer. One defoamer may be used individually, or two or more defoamers may be used in combination. The defoamer is preferably a mineral oil-based defoamer from a viewpoint of inhibiting the formation of aggregates in the binder composition after long-term storage.

The defoamer can be a commonly known defoamer and can be selected from various types of defoamers that are commercially available. For example, DF6351 (produced by Seiko PMC Corporation) can preferably be used as a mineral oil-based defoamer.

The content of the defoamer in the binder composition is preferably 0.02 parts by mass or more per 100 parts by mass of the binder, and is preferably 0.3 parts by mass or less, more preferably 0.1 parts by mass or less, and even more preferably 0.06 parts by mass or less per 100 parts by mass of the binder. When the content of the defoamer is not less than the lower limit set forth above, formation of aggregates in the binder composition after long-term storage can be inhibited. On the other hand, when the content of the defoamer is not more than any of the upper limits set forth above, sufficiently high peel strength of an electrode can be ensured.

The preservative may be a known preservative such as an isothiazoline-based compound or 2-bromo-2-nitro-1,3-propanediol. The isothiazoline-based compound is not specifically limited and may be any of those described in JP2013-211246A, JP2005-097474A, or JP2013-206624A. The preservative is preferably 1,2-benzisothiazolin-3-one, 2-methyl-4-isothiazolin-3-one, 5-chloro-2-methyl-4-isothiazolin-3-one, or 2-bromo-2-nitro-1,3-propanediol, and more preferably 1,2-benzisothiazolin-3-one.

The content of the preservative in the binder composition is preferably 0.01 parts by mass or more per 100 parts by mass of the polymer, and is preferably 0.5 parts by mass or less, more preferably 0.4 parts by mass or less, and even more preferably 0.3 parts by mass or less per 100 parts by mass of the polymer. When the content of the preservative is not less than the lower limit set forth above, viscosity stability of a slurry composition that is produced using the binder composition can be improved. On the other hand, when the content of the preservative is not more than any of the upper limits set forth above, sufficiently high peel strength of an electrode can be ensured.

### <Solid content concentration of binder composition>

The solid content concentration of the binder composition is preferably 30 mass% or more, and more preferably 40 mass% or more, and is preferably 60 mass% or less, and more preferably 50 mass% or less. When the solid content concentration of the binder composition is not less than any of the lower limits set forth above, non-uniform distribution of the polymer in an obtained electrode mixed material layer can be inhibited when a slurry composition produced using the binder composition is dried to form an electrode mixed material layer, and peel strength of an electrode can be improved. On the other hand, when the solid content concentration of the binder composition is not more than any of the upper limits set forth above, formation of aggregates in the binder composition after long-term storage can be inhibited.

### <pH of binder composition>

The pH of the binder composition is preferably 6.0 or higher, more preferably 7.0 or higher, and even more preferably 8.0 or higher, and is preferably 10.0 or lower. When the pH of the binder composition is not lower than any of the lower limits set forth above, peel strength of an electrode that is formed from a slurry composition produced using the binder composition can be improved. On the other hand, when the pH of the binder composition is not higher than the upper limit set forth above, viscosity stability of a slurry composition can be improved.

### <Production method of binder composition>

No specific limitations are placed on the production method of the presently disclosed binder composition so long as the produced binder composition contains a polymer and a solvent and satisfies both of the conditions (1) and (2) set forth above.

One example of a production method of the presently disclosed binder composition includes a raw material step of preparing raw materials, a polymerization step of using the raw materials prepared in the raw material step to polymerize monomer(s) in a solvent to obtain a dispersion liquid or solution of a polymer, and a product filtration step of filtering the dispersion liquid or solution of the polymer that has been obtained in the polymerization step to obtain a binder composition. It is preferable that contaminant removal treatment is performed in one or more steps selected from the group consisting of the raw material step, the polymerization step, and the product filtration step described above.

The following provides a detailed description of contaminant removal treatment in each step.

### <<Raw material step>>

In the raw material step, raw materials that are to be used to produce the binder composition are prepared. Contaminant removal treatment can be performed in the raw material step with respect to at least some of the raw materials that are to be used to produce the binder composition. This makes it easy to remove fine contaminant particles (for example, particles having a maximum diameter of 15 µm or less) originating from the raw materials while in a state in which a polymer (particularly a particulate polymer) is not present.

Examples of raw materials that can serve as a subject of the contaminant removal treatment include, but are not specifically limited to, various types of monomers, emulsifiers, dispersants, polymerization initiators, and polymerization aids that can be used in production of the previously described polymer, solvents, other components (defoamers, preservatives, etc.) that can be used in production of the binder composition, pH modifiers (sodium hydroxide, etc.), and so forth. Note that contaminant removal treatment may be performed with respect to just one of these raw materials or may be performed with respect to two or more of these raw materials.

Examples of types of contaminant removal treatment that can be implemented in the raw material step include filtration by a filter, centrifugal separation treatment, and treatment by a cyclone separator. Note that one of these types of contaminant removal treatment may be implemented individually, or two or more of these types of contaminant removal treatment may be implemented in combination.

The filtration rating of a filter used in filtration is preferably 0.1 µm or more, more preferably 0.15 µm or more, and even more preferably 0.2 µm or more, and is preferably 20 µm or less, more preferably 15 µm or less, even more preferably 10 µm or less, further preferably 5 µm or less, even further preferably 1 µm or less, and particularly preferably 0.4 µm or less.

When the filtration rating of the filter used in filtration is not less than any of the lower limits set forth above, production efficiency of the binder composition can be improved because clogging of the filter by the raw material can be prevented. On the other hand, when the filtration rating of the filter used in filtration is not more than any of the upper limits set forth above, this makes it easier for the obtained binder composition to satisfy the conditions (1) and (2) set forth above because it enables good removal of contaminants contained in the raw material. Consequently, coatability of a slurry composition that is produced using the binder composition can be further improved, and low-temperature cycle characteristics of a secondary battery that includes an electrode formed using the slurry composition can be further improved.

Note that filtration of a raw material by a filter may be implemented just once or may be repeatedly implemented a plurality of times in a cyclical manner, for example, without any specific limitations.

No specific limitations are placed on a centrifuge used in the centrifugal separation treatment, and a decanter centrifuge can be used, for example.

### <<Polymerization step>>

In the polymerization step, the raw materials that have been prepared in the raw material step are used to polymerize monomer(s) in a solvent to obtain a dispersion liquid or solution of a polymer.

Contaminant removal treatment can be implemented in the polymerization step with respect to the polymerization reaction liquid and with respect to the dispersion liquid or solution of the polymer that is obtained thereafter.

Examples of types of contaminant removal treatment that can be implemented in the polymerization step include treatment by a metal trapping magnet such as a magnetic bar or a magnetic strainer and treatment by a vibrating sieve. Note that one of these types of contaminant removal treatment may be implemented individually, or two or more of these types of contaminant removal treatment may be implemented in combination.

Moreover, the contaminant removal treatment that can be implemented in the polymerization step is preferably treatment by a metal trapping magnet such as a magnetic bar or a magnetic strainer. By performing treatment by a metal trapping magnet such as a magnetic bar or a magnetic strainer as contaminant removal treatment in the polymerization step, it is possible to efficiently remove metal particles present as contaminants. This makes it easier for the obtained binder composition to satisfy the conditions (1) and (2) set forth above, presumably because the formation of aggregates of the polymer through cross-linking with metal particles as nuclei can be inhibited.

Moreover, it is more preferable that treatment using a magnetic strainer is performed in a cyclical manner as contaminant removal treatment in the polymerization step. This enables even more efficient removal of metal particles present as contaminants.

The magnetic flux density of the metal trapping magnet such as a magnetic bar or a magnetic strainer is preferably 2,000 gauss or more, more preferably 4,000 gauss or more, and even more preferably 6,000 gauss or more. When the magnetic flux density of the metal trapping magnet is not less than any of the lower limits set forth above, this enables even more efficient removal of metal particles present as contaminants.

Note that the upper limit for the magnetic flux density of the metal trapping magnet is not specifically limited and may be 12,000 gauss or less, may be 11,000 gauss or less, or may be 10,000 gauss or less, for example.

The mesh size of a vibrating sieve that can be used in contaminant removal treatment is preferably 100 mesh to 200 mesh.

A pH modifier such as sodium hydroxide aqueous solution or another component that can be used in the binder composition (for example, a defoamer or a preservative) can be further added as necessary to the obtained water dispersion or solution of the polymer after the polymerization reaction.

### <<Product filtration step>>

In the product filtration step, the dispersion liquid or solution of the polymer that has been obtained in the polymerization step is filtered to obtain a binder composition.

Examples of types of contaminant removal treatment that can be implemented in the product filtration step include filtration by a filter and filtration by a magnetic strainer. Note that one of these types of contaminant removal treatment may be implemented individually, or two or more of these types of contaminant removal treatment may be implemented in combination.

Moreover, from a viewpoint of efficiently removing contaminants originating from the overall production process, it is preferable that both filtration by a filter and filtration by a magnetic strainer are implemented in the product filtration step.

The filtration rating of a filter that can be used in filtration in the product filtration step is preferably 3 µm or more, more preferably 4 µm or more, and even more preferably 5 µm or more, and is preferably 15 µm or less, more preferably 12 µm or less, even more preferably 10 µm or less, and further preferably 8 µm or less.

When the filtration rating of the filter that can be used in filtration in the product filtration step is not less than any of the lower limits set forth above, production efficiency of the binder composition can be improved because clogging of the filter by components such as the polymer can be prevented. On the other hand, when the filtration rating of the filter that can be used in filtration in the product filtration step is not more than any of the upper limits set forth above, this makes it easier for the obtained binder composition to satisfy the conditions (1) and (2) set forth above because it enables good removal of contaminants contained in the dispersion liquid or solution of the polymer, etc. Consequently, coatability of a slurry composition that is produced using the binder composition can be further improved, and low-temperature cycle characteristics of a secondary battery that includes an electrode formed using the slurry composition can be further improved.

The magnetic flux density of a magnetic strainer that can be used in filtration in the product filtration step is preferably 2,000 gauss or more, more preferably 4,000 gauss or more, and even more preferably 6,000 gauss or more. When the magnetic flux density of the magnetic strainer is not less than any of the lower limits set forth above, this enables efficient removal of metal particles that are present as contaminants.

Note that the upper limit for the magnetic flux density of the magnetic strainer that can be used in filtration in the product filtration step is not specifically limited and may be 12,000 gauss or less, may be 11,000 gauss or less, or may be 10,000 gauss or less, for example.

Although one example of a production method of the presently disclosed binder composition has been described above, the method by which the presently disclosed binder composition is produced is not limited to the example described above.

As described above, it is preferable that contaminant removal treatment is implemented in one or more steps selected from the group consisting of the raw material step, the polymerization step, and the product filtration step, but it is not essential that contaminant removal treatment is implemented in all three of the raw material step, the polymerization step, and the product filtration step. For example, by increasing the magnetic flux density of a magnetic strainer that is used in contaminant removal treatment in at least the polymerization step and also increasing the number of times that treatment is performed in a cyclical manner by the magnetic strainer, it is possible to increase removal efficiency of contaminant particles and to produce a binder composition that satisfies both of the conditions (1) and (2) set forth above. Alternatively, by using a filter having a better filtration rating in contaminant removal treatment in the product filtration step and also repeatedly implementing filtration by the filter in a cyclical manner, for example, it is possible to increase removal efficiency of contaminant particles and to produce a binder composition that satisfies both of the conditions (1) and (2) set forth above.

### (Slurry composition for non-aqueous secondary battery electrode)

The presently disclosed slurry composition is a composition that is used in an application of forming an electrode mixed material layer of an electrode and that contains at least an electrode active material and the binder composition set forth above. In other words, the presently disclosed slurry composition contains an electrode active material, a polymer, and a solvent and may further contain components (optional components) that are compounded as necessary with an object such as modifying properties of the slurry composition or improving performance of a secondary battery.

Moreover, as a result of the presently disclosed slurry composition containing the binder composition set forth above, the presently disclosed slurry composition has excellent coatability, and an electrode that includes an electrode mixed material layer formed using the slurry composition can cause a secondary battery to display excellent low-temperature cycle characteristics.

### <Electrode active material>

The electrode active material is a material that gives and receives electrons in an electrode of a secondary battery. In a case in which the secondary battery is a lithium ion secondary battery, for example, the electrode active material is normally a material that can occlude and release lithium.

Although the following describes, as one example, a case in which the slurry composition for a non-aqueous secondary battery electrode is a slurry composition for a lithium ion secondary battery electrode, the presently disclosed slurry composition for a non-aqueous secondary battery electrode is not limited to the following example.

### <<Positive electrode active material>>

A positive electrode active material that is compounded in a positive electrode mixed material layer of a positive electrode in a lithium ion secondary battery may be a compound that includes a transition metal such as a transition metal oxide, a transition metal sulfide, or a complex metal oxide of lithium and a transition metal, for example. Examples of the transition metal include Ti, V, Cr, Mn, Fe, Co, Ni, Cu, and Mo.

Specifically, the positive electrode active material may be lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a lithium-rich spinel compound represented by Li₁₊ₓMn₂₋ₓO₄ (0 < x < 2), Li[Ni_{0.17}Li_{0.2}Co_{0.07}Mn_{0.56}]O₂, LiNi_{0.5}Mn_{1.5}O₄, or the like without any specific limitations.

One of the above-described positive electrode active materials can be used individually, or two or more of the above-described positive electrode active materials can be used in combination.

Note that the particle diameter of the positive electrode active material and the amount of the positive electrode active material that is compounded in the slurry composition can be the same as those of a conventionally used positive electrode active material without any specific limitations.

### <<Negative electrode active material>>

A negative electrode active material that is compounded in a negative electrode mixed material layer of a negative electrode in a lithium ion secondary battery may be a carbon-based negative electrode active material, a metal-based negative electrode active material, a negative electrode active material that is a combination thereof, or the like, for example.

Here, the term "carbon-based negative electrode active material" refers to an active material having carbon as a main framework into which lithium can be inserted (also referred to as "doping"). Specific examples of the carbon-based negative electrode active material include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon, and graphitic materials such as natural graphite and artificial graphite.

The metal-based negative electrode active material is an active material that contains metal, the structure of which usually contains an element that allows insertion of lithium, and that has a theoretical electric capacity per unit mass of 500 mAh/g or more when lithium is inserted. Examples of the metal-based active material include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides thereof. Moreover, an oxide such as lithium titanate can also be used.

One of the above-described negative electrode active materials can be used individually, or two or more of the above-described negative electrode active materials can be used in combination.

Note that the particle diameter of the negative electrode active material and the amount of the negative electrode active material that is compounded in the slurry composition can be the same as those of a conventionally used negative electrode active material without any specific limitations.

### <Binder composition>

The presently disclosed binder composition for a non-aqueous secondary battery electrode set forth above can be used as the binder composition.

No specific limitations are placed on the amount of the binder composition that is used in production of the slurry composition. For example, the binder composition can be compounded in an amount such that the amount of a polymer originating from the binder composition is not less than 0.5 parts by mass and not more than 15 parts by mass in terms of solid content per 100 parts by mass of the electrode active material.

### <Optional components>

Examples of optional components other than the electrode active material, the polymer, and the solvent that can be contained in the presently disclosed slurry composition include thickeners such as carboxymethyl cellulose and salts thereof, conductive materials such as carbon black, and defoamers and preservatives such as previously described in the "Binder composition for non-aqueous secondary battery electrode" section. One optional component can be used individually, or two or more optional components can be used in combination.

### <Production method of slurry composition>

The slurry composition can be produced by mixing the electrode active material, the binder composition, and optional components that are used as necessary by a known mixing method.

No specific limitations are placed on the mixing method, and the mixing can be performed using a typically used stirrer or disperser. Moreover, a solvent may be further added in production of the slurry composition, separately to a solvent such as water that originates from the binder composition.

### (Electrode for non-aqueous secondary battery)

The presently disclosed electrode includes an electrode mixed material layer that has been formed using the slurry composition set forth above. The electrode mixed material layer is normally a dried product of the slurry composition. Consequently, the electrode mixed material layer contains at least an electrode active material and a polymer (binder), and may contain optional components as necessary. It should be noted that components contained in the electrode mixed material layer are components that are contained in the previously described slurry composition. Furthermore, the preferred ratio of these components in the electrode mixed material layer is the same as the preferred ratio of these components in the slurry composition. Also note that in a case in which the slurry composition contains a particulate polymer as the polymer, although the particulate polymer is present in a particulate form in the slurry composition, the particulate polymer may be in a particulate form or may be in any other form in the electrode mixed material layer that is formed using the slurry composition.

Moreover, as a result of the electrode mixed material layer in the presently disclosed electrode being formed using the slurry composition set forth above that has excellent coatability, formation of craters on the electrode mixed material layer due to coating defects is sufficiently inhibited. Furthermore, the presently disclosed electrode can cause a secondary battery to display excellent low-temperature cycle characteristics as a result of the presently disclosed electrode including an electrode mixed material layer that has been formed using the slurry composition set forth above.

### <Production method of electrode>

The presently disclosed electrode can be produced by any of the following methods (1) to (3), for example.
(1) A method in which the slurry composition is applied onto the surface of a current collector and is then dried
(2) A method in which a current collector is immersed in the slurry composition and is then dried
(3) A method in which the slurry composition is applied onto a releasable substrate and is dried to produce an electrode mixed material layer that is then transferred onto the surface of a current collector

Of these methods, method (1) is particularly preferable because it is easy to control the thickness of the electrode mixed material layer. In more detail, method (1) includes a step of applying the slurry composition onto a current collector (application step) and a step of drying the slurry composition that has been applied onto the current collector to form an electrode mixed material layer on the current collector (drying step).

### <<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. Note that one of these materials can be used individually, or two or more of these materials can be used in combination.

### <<Drying step>>

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, an electrode mixed material layer can be formed on the current collector to thereby obtain an electrode that includes the current collector and the electrode mixed material layer.

After the drying step, the electrode mixed material layer may be further subjected to a pressing process, such as mold pressing or roll pressing. The pressing process can improve peel strength of the electrode and enables even further densification of the obtained electrode mixed material layer. Furthermore, in a case in which the electrode mixed material layer contains a curable polymer, the polymer is preferably cured after the electrode mixed material layer has been formed.

### (Non-aqueous secondary battery)

The presently disclosed secondary battery includes the presently disclosed electrode set forth above. For example, the presently disclosed secondary battery may include a positive electrode, a negative electrode, an electrolyte solution, and a separator, and the presently disclosed electrode set forth above may be used as at least one of the positive electrode and the negative electrode. The presently disclosed secondary battery can display excellent low-temperature cycle characteristics as a result of including the presently disclosed electrode set forth above.

Although the following describes, as one example, a case in which the secondary battery is a lithium ion secondary battery, the presently disclosed secondary battery is not limited to the following example.

### <Electrodes>

Known electrodes that are used in production of secondary batteries can be used without any specific limitations in the presently disclosed secondary battery as an electrode other than the presently disclosed electrode set forth above. Specifically, an electrode obtained by forming an electrode mixed material layer on a current collector by a known production method can be used as an electrode other than the presently disclosed electrode set forth above.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. Note that one electrolyte can be used individually, or two or more electrolytes can be used in combination. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution can be adjusted as appropriate. Furthermore, known additives may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The secondary battery can be produced by, for example, stacking the positive electrode and the negative electrode with the separator in-between, performing rolling, folding, or the like of the resultant laminate according to the battery shape, as necessary, to place the laminate in a battery container, injecting the electrolyte solution into the battery container, and sealing the battery container. In the presently disclosed secondary battery, the electrode for a secondary battery set forth above is used as at least one of the positive electrode and the negative electrode. The presently disclosed secondary battery may be provided with an overcurrent preventing device such as a fuse or a PTC device, an expanded metal, a lead plate, or the like, as necessary, in order to prevent pressure increase inside the secondary battery and occurrence of overcharging or overdischarging. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to these examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Various measurements and evaluations in the examples and comparative examples were performed according to the following methods.

### (Number of particles, etc.)

The number of particles [particles/L] having a maximum diameter of not less than 5 µm and not more than 15 µm that are observed on a mesh filter after filtration, the proportion [%] of the number of particles having a maximum diameter of more than 15 µm relative to the total number of particles that are observed on a mesh filter after filtration, the number of non-metal particles [particles/L] having a maximum diameter of not less than 5 µm and not more than 15 µm that are observed on a mesh filter after filtration, and the proportion [%] of the number of non-metal particles having a maximum diameter of more than 15 µm relative to the total number of non-metal particles that are observed on a mesh filter after filtration in a situation in which a binder composition is subjected to filtration using a mesh filter having an opening size of 5 µm or more were determined according to the following method.

A mesh filter having an opening size of 5 µm was used to filter 500 mL of a binder composition obtained in each example or comparative example. The mesh filter after filtration was observed using an optical microscope, and a viewing field image of the entire mesh filter was obtained.

Image analysis of particles in the viewing field image was performed in order to measure the total number of particles a [particles/500 mL], the number of particles b [particles/500 mL] having a maximum diameter of not less than 5 µm and not more than 15 µm, and the number of particles c [particles/500 mL] having a maximum diameter of more than 15 µm that were observed on the mesh filter after filtration per 500 mL of the filtered amount of the binder composition. The number of particles [particles/L] having a maximum diameter of not less than 5 µm and not more than 15 µm that were observed on the mesh filter after filtration per 1 L of the binder composition (= 2b) and the proportion [%] of the number of particles having a maximum diameter of more than 15 µm relative to the total number of particles that were observed on the mesh filter after filtration (= 100 × c/a) were calculated from the obtained values.

Moreover, image analysis of the viewing field image was performed in order to measure the total number of non-metal particles d [particles/500 mL], the number of non-metal particles e [particles/500 mL] having a maximum diameter of not less than 5 µm and not more than 15 µm, and the number of non-metal particles f [particles/500 mL] having a maximum diameter of more than 15 µm that were observed on the mesh filter after filtration per 500 mL of the filtered amount of the binder composition. The number of non-metal particles [particles/L] having a maximum diameter of not less than 5 µm and not more than 15 µm that were observed on the mesh filter after filtration per 1 L of the binder composition (= 2e) and the proportion [%] of the number of non-metal particles having a maximum diameter of more than 15 µm relative to the total number of non-metal particles that were observed on the mesh filter after filtration (= 100 × f/d) were calculated from the obtained values.

Note that among particles in the viewing field image, particles having transparency were judged to be non-metal particles, whereas particles not having transparency were judged to be metal particles.

Observation of the mesh filter after filtration, image analysis, and measurement of particles and non-metal particles described above were implemented using a Cleanliness Analysis System HFD4 produced by JOMESA that included an optical microscope and a contaminant automatic measurement system accompanying the optical microscope.

### (Viscosity stability of slurry composition)

The viscosity η₀ of a slurry composition was measured using a B-type viscometer (produced by Toki Sangyo Co., Ltd.; product name: TVB-10; rotor: No. 2; rotation speed: 60 rpm). Next, the slurry composition that had undergone viscosity measurement was stirred for 24 hours using a planetary mixer (rotation speed: 60 rpm), and the viscosity η₁ of the slurry composition after stirring was measured using the same type of B-type viscometer as described above (rotor: No. 2; rotation speed: 60 rpm). A viscosity maintenance rate Δη of the slurry composition between before and after stirring was calculated (Δη = η₁/η₀ × 100(%)), and viscosity stability of the slurry composition was evaluated by the following standard. Note that the temperature during viscosity measurement was 25°C. A value of closer to 100% for the viscosity maintenance rate Δη indicates that the slurry composition has better viscosity stability.
A: Viscosity maintenance rate Δη of not less than 90% and less than 110%
B: Viscosity maintenance rate Δη of not less than 80% and less than 90% or of not less than 110% and less than 130%
C: Viscosity maintenance rate Δη of less than 80% or of 130% or more

### (Coatability of slurry composition)

A coating surface of a produced negative electrode (surface at a negative electrode mixed material layer-side) was observed, the number of craters formed due to coating defects was confirmed, and an evaluation was made by the following standard. Note that in the case of an "A" evaluation indicated below (i.e., a case in which the number of craters per 1 m in a longitudinal direction of the negative electrode is less than 1), the coatability of a slurry composition that was used to form the negative electrode can be said to be excellent, and the formed negative electrode can be said to be free of electrode coating defects.
A: Number of craters per 1 m in longitudinal direction of negative electrode is less than 1
B: Number of craters per 1 m in longitudinal direction of negative electrode is 1 or more

### (Low-temperature cycle characteristics of secondary battery)

A produced lithium ion secondary battery was left at rest in a 25°C environment for 24 hours. Thereafter, the lithium ion secondary battery was subjected to a charge/discharge operation of charging to 4.35 V at a charge rate of 0.5C and discharging to 3.0 V at a discharge rate of 0.5C in a 25°C environment, and the initial capacity C0 was measured. In addition, the lithium ion secondary battery was repeatedly subjected to the same charge/discharge operation in a 0°C environment, and the capacity C1 after 50 cycles was measured. A capacity maintenance rate ΔC was calculated (ΔC = (C1/C0) × 100(%)) and was evaluated by the following standard. A higher value for this capacity maintenance rate indicates that there is less reduction of discharge capacity and that the secondary battery has better cycle characteristics at low temperature (i.e., low-temperature cycle characteristics).
A: Capacity maintenance rate ΔC of 45% or more
B: Capacity maintenance rate ΔC of not less than 40% and less than 45%
C: Capacity maintenance rate ΔC of not less than 35% and less than 40%
D: Capacity maintenance rate ΔC of less than 35%

### (Example 1)

### <Production of binder composition>

### <<Raw material step>>

All raw materials that were to be used in the subsequently described polymerization step were filtered using a mesh filter (produced by 3M; filtration rating: 0.2 µm).

### <<Polymerization step>>

A 5 MPa pressure-resistant vessel A including a stirrer and a magnetic strainer (magnetic flux density: 10,000 gauss) was charged with 38 parts of styrene, 60 parts of 1,3-butadiene, 2 parts of methacrylic acid, 4 parts of sodium dodecyl diphenyl ether sulfonate as an emulsifier, 150 parts of deionized water, 0.15 parts of tert-dodecyl mercaptan as a chain transfer agent, and 0.3 parts of potassium persulfate as a polymerization initiator. These materials were thoroughly stirred and were then heated to 60°C to initiate polymerization and obtain seed particles (particulate diene polymer).

Next, 6 parts of the seed particles, 82 parts of deionized water, and 0.2 parts of sodium dodecyl diphenyl ether sulfonate as an emulsifier were loaded into a 5 MPa pressure-resistant vessel B including a stirrer and a magnetic strainer (magnetic flux density: 10,000 gauss), were heated to 75°C, and then 18 parts of deionized water and 1.8 parts of itaconic acid were further loaded. In addition, a mixture of 44 parts of deionized water, 63 parts of styrene, 33.2 parts of 1,3-butadiene, 2 parts of itaconic acid, 0.2 parts of sodium dodecyl diphenyl ether sulfonate as an emulsifier, and 0.4 parts of sodium bicarbonate that had been loaded into a separate vessel C was continuously added into the pressure-resistant vessel B, and, simultaneously therewith, 0.5 parts of potassium persulfate as a polymerization initiator was loaded into the pressure-resistant vessel B so as to initiate a second stage of polymerization. Moreover, after the second stage of polymerization had started, 0.3 parts of tert-dodecyl mercaptan as a chain transfer agent was added into the vessel C. In addition, a total amount of 0.5 parts of potassium persulfate as a polymerization initiator was continuously added into the pressure-resistant vessel B over 210 minutes from after the start of polymerization. Furthermore, 0.5 parts of 2-hydroxyethyl acrylate was added at 180 minutes and at 200 minutes from the start of polymerization. Thereafter, the pressure-resistant vessel B was heated to 90°C, and sodium nitrite was added after 480 minutes so as to stop the reaction.

The resultant water dispersion containing a diene polymer as a particulate polymer was adjusted to pH 8 through addition of 5% sodium hydroxide aqueous solution. Thermal-vacuum distillation was subsequently performed to remove unreacted monomer. Thereafter, cooling was performed to 30°C or lower.

With respect to the cooled water dispersion containing the diene polymer, 0.05 parts of a mineral oil-based defoamer (produced by Seiko PMC Corporation; product name: DF6351) was added as a defoamer and 0.1 parts of an isothiazoline-based compound (1,2-benzisothiazolin-3-one) was added as a preservative per 100 parts of the diene polymer to yield a pre-filtration binder composition.

### <<Product filtration step>>

The pre-filtration binder composition obtained as described above was passed through a magnetic strainer (magnetic flux density: 10,000 gauss) and was then further passed through a filter (produced by Nihon Pall Ltd.; filtration rating: 5 µm) to obtain a passed filtrate as a binder composition (solid content concentration: 40%).

The obtained binder composition was used to measure the number of particles, etc. The results are shown in Table 1.

### <Production of slurry composition for negative electrode>

A planetary mixer equipped with a disper blade was charged with 100 parts of graphite as negative electrode active material particles, 0.2 parts of carbon black (produced by Denka Company Limited; product name: HS-100) as a conductive material, and 1.0 parts in terms of solid content of a 2% aqueous solution of carboxymethyl cellulose (produced by Nippon Paper Industries Co., Ltd.; product name: MAC-500LC) as a water-soluble polymer to obtain a mixture. The obtained mixture was adjusted to a solid content concentration of 60% with deionized water and was subsequently mixed at 25°C for 60 minutes. Next, the solid content concentration was adjusted to 53% with deionized water, and a further 10 minutes of mixing was performed at 25°C to obtain a mixed liquid. Deionized water and 2.0 parts in terms of solid content of the binder composition were added to the obtained mixed liquid such that the final solid content concentration was adjusted to 48%. After a further 10 minutes of mixing, defoaming treatment was performed under reduced pressure to obtain a slurry composition for a negative electrode.

The viscosity stability of the obtained slurry composition for a negative electrode was evaluated. The result is shown in Table 1.

### <Production of negative electrode>

The slurry composition for a negative electrode was applied onto copper foil of 15 µm in thickness serving as a current collector by a comma coater such that the coating weight after drying was 9 mg/cm². The slurry composition was dried by conveying the copper foil inside of a 60°C oven for 2 minutes at a speed of 0.5 m/min. Thereafter, 2 minutes of heat treatment was performed at 120°C to obtain a negative electrode web. The negative electrode web was rolled by roll pressing to obtain a negative electrode having a negative electrode mixed material layer density of 1.70 g/cm³. This negative electrode was used to evaluate coatability of the slurry composition for a negative electrode. The result is shown in Table 1.

### <Production of positive electrode>

A slurry composition for a positive electrode was obtained by mixing together 100 parts of LiCoO₂ having a volume-average particle diameter of 12 µm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting the total solid content concentration to 70%, and mixing these materials in a planetary mixer.

The obtained slurry composition for a positive electrode was applied onto aluminum foil of 20 µm in thickness serving as a current collector by a comma coater such that the coating weight after drying was 23 mg/cm². The applied slurry composition was dried by conveying the aluminum foil inside of a 60°C oven for 2 minutes at a speed of 0.5 m/min. Thereafter, 2 minutes of heat treatment was performed at 120°C to obtain a positive electrode web.

The positive electrode web was rolled by roll pressing to obtain a positive electrode having a positive electrode mixed material layer density of 4.0 g/cm³.

### <Preparation of separator>

A separator made of a single layer of polypropylene (produced by Celgard, LLC.; product name: Celgard 2500) was prepared as a separator formed of a separator substrate.

### <Production of lithium ion secondary battery>

The obtained positive electrode was cut out as a rectangle of 49 cm × 5 cm and was placed with the surface at the positive electrode mixed material layer-side facing upward. The separator was cut out as 120 cm × 5.5 cm and was arranged on the positive electrode mixed material layer such that the positive electrode was positioned at a left side of the separator in a longitudinal direction. In addition, the obtained negative electrode was cut out as a rectangle of 50 cm × 5.2 cm and was arranged on the separator such that the surface at the negative electrode mixed material layer-side faced toward the separator and such that the negative electrode was positioned at a right side of the separator in the longitudinal direction. The resultant laminate was wound by a winding machine to obtain a roll. This roll was enclosed in an aluminum packing case serving as a battery case, electrolyte solution (solvent: ethylene carbonate/diethyl carbonate/vinylene carbonate = 68.5/30/1.5 (volume ratio); electrolyte: LiPF₆ of 1 M in concentration) was injected such that no air remained, and an opening of the aluminum packing case was closed by heat sealing at 150°C to produce a wound lithium ion secondary battery having a capacity of 800 mAh. The obtained lithium ion secondary battery was used to evaluate low-temperature cycle characteristics. The result is shown in Table 1.

### (Example 2)

Production of a binder composition, production of a slurry composition for a negative electrode, production of a negative electrode, production of a positive electrode, preparation of a separator, and production of a lithium ion secondary battery were performed and various evaluations were also performed in the same way as in Example 1 with the exception that in production of the binder composition, the filtration rating of the mesh filter that was used in the raw material step was changed from 0.2 µm to 0.5 µm. The results are shown in Table 1.

### (Example 3)

Production of a binder composition, production of a slurry composition for a negative electrode, production of a negative electrode, production of a positive electrode, preparation of a separator, and production of a lithium ion secondary battery were performed and various evaluations were also performed in the same way as in Example 1 with the exception that in production of the binder composition, the filtration rating of the mesh filter that was used in the raw material step was changed from 0.2 µm to 0.5 µm and the filtration rating of the filtration filter that was used in the product filtration step was changed from 5 µm to 10 µm. The results are shown in Table 1.

### (Example 4)

Production of a binder composition, production of a slurry composition for a negative electrode, production of a negative electrode, production of a positive electrode, preparation of a separator, and production of a lithium ion secondary battery were performed and various evaluations were also performed in the same way as in Example 1 with the exception that in production of the binder composition, the magnetic flux density of the magnetic strainer that was used in the product filtration step was changed from 10,000 gauss to 12,000 gauss, and the filtrate that had passed through the filtration filter was once again passed through a magnetic strainer (magnetic flux density: 12,000 gauss) and a filtration filter (filtration rating: 5 µm), in order, so as to obtain a filtrate as the binder composition. The results are shown in Table 1.

### (Example 5)

Production of a binder composition, production of a slurry composition for a negative electrode, production of a negative electrode, production of a positive electrode, preparation of a separator, and production of a lithium ion secondary battery were performed and various evaluations were also performed in the same way as in Example 1 with the exception that in production of the slurry composition for a negative electrode, 1.0 parts (in terms of solid content) of a binder composition containing a water-soluble polymer produced by the following method was used instead of 1.0 parts (in terms of solid content) of a 2% aqueous solution of carboxymethyl cellulose as a water-soluble polymer. The results are shown in Table 1.

### <Production of binder composition containing water-soluble polymer>

### <<Raw material step>>

Raw materials that were to be used in the subsequently described polymerization step, with the exception of deionized water, were filtered using a mesh filter (produced by 3M; filtration rating: 0.2 µm).

### <<Polymerization step>>

A 5 MPa pressure-resistant vessel A including a stirrer and a magnetic strainer (magnetic flux density: 10,000 gauss) was charged with 25 parts of acrylic acid, 75 parts of acrylamide, 0.004 parts of ascorbic acid, 2,100 parts of deionized water, and 0.05 parts of potassium persulfate as a polymerization initiator. These materials were thoroughly stirred and were then heated to 40°C to initiate polymerization. Thereafter, the temperature was raised to 50°C, 0.3 parts of sodium hydrogen sulfite and 0.75 parts of potassium persulfate were added, and polymerization was continued. After further raising the temperature to 70°C and continuing polymerization, 0.2 parts of sodium nitrite was added to stop the reaction.

The resultant aqueous solution of a water-soluble polymer was adjusted to pH 8 through addition of 8% lithium hydroxide aqueous solution. In addition, with respect to the aqueous solution of the water-soluble polymer, 0.01 parts in terms of solid content of an isothiazoline-based compound (1,2-benzisothiazolin-3-one) was added as a preservative per 100 parts of the water-soluble polymer to yield a pre-filtration binder composition.

### <Product filtration step>

The pre-filtration binder composition obtained as described above was passed through a magnetic strainer (magnetic flux density: 10,000 gauss) and was then further passed through a filtration filter (produced by Nihon Pall Ltd.; filtration rating: 10 µm) to obtain a passed filtrate as a binder composition.

### (Comparative Example 1)

Production of a binder composition, production of a slurry composition for a negative electrode, production of a negative electrode, production of a positive electrode, preparation of a separator, and production of a lithium ion secondary battery were performed and various evaluations were also performed in the same way as in Example 1 with the exception that the raw material step was not implemented, the pressure-resistant vessel A and the pressure-resistant vessel B that were used in the polymerization step were not provided with a magnetic strainer, and the filtration rating of the filtration filter that was used in the product filtration step was changed from 5 µm to 10 µm. The results are shown in Table 2.

### (Comparative Example 2)

Production of a binder composition, production of a slurry composition for a negative electrode, production of a negative electrode, production of a positive electrode, preparation of a separator, and production of a lithium ion secondary battery were performed and various evaluations were also performed in the same way as in Example 1 with the exception that the raw material step was not implemented, and the filtration rating of the filtration filter that was used in the product filtration step was changed from 5 µm to 10 µm. The results are shown in Table 2.

### (Comparative Example 3)

Production of a binder composition, production of a slurry composition for a negative electrode, production of a negative electrode, production of a positive electrode, preparation of a separator, and production of a lithium ion secondary battery were performed and various evaluations were also performed in the same way as in Example 1 with the exception that the pressure-resistant vessel A and the pressure-resistant vessel B that were used in the polymerization step were not provided with a magnetic strainer, and the filtration rating of the filtration filter that was used in the product filtration step was changed from 5 µm to 10 µm. The results are shown in Table 2.

### (Comparative Example 4)

Production of a binder composition, production of a slurry composition for a negative electrode, production of a negative electrode, production of a positive electrode, preparation of a separator, and production of a lithium ion secondary battery were performed and various evaluations were also performed in the same way as in Example 1 with the exception that the raw material step was not implemented, the pressure-resistant vessel A and the pressure-resistant vessel B that were used in the polymerization step were not provided with a magnetic strainer, and the pre-filtration binder composition that was obtained in the polymerization step was used in that form as the binder composition without implementing the product filtration step. The results are shown in Table 2.

### (Comparative Example 5)

Production of a binder composition, production of a slurry composition for a negative electrode, production of a negative electrode, production of a positive electrode, preparation of a separator, and production of a lithium ion secondary battery were performed and various evaluations were also performed in the same way as in Example 1 with the exception that the filtration rating of the mesh filter that was used in the raw material step was changed from 0.2 µm to 20 µm, the magnetic flux density of the magnetic strainers provided in the pressure-resistant vessel A and the pressure-resistant vessel B that were used in the polymerization step was changed from 10,000 gauss to 2,000 gauss, the filtration rating of the filtration filter that was used in the product filtration step was changed from 5 µm to 20 µm, and a magnetic strainer was not used in the product filtration step. The results are shown in Table 2.

**[Table 1]**

| | | | Example 1 | Example 2 | Example 3 | Example 4 | Example 5 |
|---|---|---|---|---|---|---|---|
| | Type of polymer | | Particulate polymer | Particulate polymer | Particulate polymer | Particulate polymer | Water-soluble polymer |
| | Observed on mesh filter (opening size: 5 µm) after filtration | Number of particles A1 having maximum diameter of not less than 5 µm and not more than 15 µm [particles/L] | *500* | 1000 | 1500 | *50* | 100 |
| | | Proportion B1 of number of particles having maximum diameter of more than 15 µm relative to total number of particles [%] | 10 | 20 | 30 | 40 | 30 |
| | | Number of non-metal particles A2 having maximum diameter of not less than 5 µm and not more than 15 µm [particles/L] | 500 | 999 | 1499 | 50 | 99 |
| Binder composition | | Proportion B2 of number of non-metal particles having maximum diameter of more than 15 µm relative to total number of non-metal particles [%] | 10 | 20 | 30 | 40 | 30 |
| | Parameter 1 | Value of A1 × B1 [-] | 5000 | 20000 | 45000 | 2000 | 3000 |
| | Parameter 2 | Value of A2 × B2 [-] | 5000 | 19980 | 44970 | 2000 | 2970 |
| | Contaminant removal treatment in production steps | Raw material step | Mesh filter (filtration rating: 0.2 µm) | Mesh filter (filtration rating: 0.5 µm) | Mesh filter (filtration rating: 0.5 µm) | Mesh filter (filtration rating: 0.2 µm) | Mesh filter (filtration rating: 0.2 µm) |
| | | Polymerization step | Magnetic strainer (10000 gauss) | Magnetic strainer (10000 gauss) | Magnetic strainer (10000 gauss) | Magnetic strainer (10000 gauss) | Magnetic strainer (10000 gauss) |
| | | Product filtration step | Filter (filtration rating: 5 µm) + Magnetic strainer (10000 gauss) | Filter (filtration rating: 5 µm) + Magnetic strainer (10000 gauss) | Filter (filtration rating: 10 µm) + Magnetic strainer (10000 gauss) | ***Following performed twice in total** | Filter (filtration rating: 10 µm) + Magnetic strainer (10000 gauss) |
| | | | | | | Filter (filtration rating: 5 µm) + Magnetic strainer (12000 gauss) | |
| Evaluation results | | Viscosity stability of slurry composition | A | B | B | A | A |
| | | Coatability of slurry composition | A | A | A | A | A |
| | | Low-temperature cycle characteristics of secondary battery | A | A | B | A | A |

**[Table 2]**

| | | | Comparative Example 1 | Comparative Example 2 | Comparative Example 3 | Comparative Example 4 | Comparative Example 5 |
|---|---|---|---|---|---|---|---|
| | Type of polymer | | Particulate polymer | Particulate polymer | Particulate polymer | Particulate polymer | Particulate polymer |
| | Observed on mesh filter (opening size: | Number of particles A1 having maximum diameter of not less than 5 µm and not more than 15 µm [particles/L] | 2500 | 3000 | 1000 | *5000* | 2500 |
| | | Proportion B1 of number of particles having maximum diameter of more than 15 µm relative to total number of particles [%] | 30 | 35 | 50 | 50 | 50 |
| | (opening size: 5 µm) after filtration | Number of non-metal particles A2 having maximum diameter of not less than 5 µm and not more than 15 µm [particles/L] | 2300 | 2900 | 950 | 4500 | 2100 |
| Binder composition | | Proportion B2 of number of non-metal particles having maximum diameter of more than 15 µm relative to total number of non-metal particles [%] | 30 | 35 | 40 | 45 | 40 |
| | Parameter 1 | Value of A1 × B1 [-] | 75000 | 105000 | *50000* | 250000 | 125000 |
| | Parameter 2 | Value of A2 × B2 [-] | 69000 | 101500 | 38000 | 202500 | 84000 |
| | Contaminant removal treatment in production steps | Raw material step | None | None | Mesh filter (filtration rating: 0.2 µm) | None | Mesh filter (filtration rating: 20 µm) |
| | | Polymerization step | None | Magnetic strainer (10000 gauss) | None | None | Magnetic strainer (2000 gauss) |
| | | Product filtration step | Filter (filtration rating: 10 µm) + Magnetic strainer (10000 gauss) | Filter (filtration rating: 10 µm) + Magnetic strainer (10000 gauss) | Filter (filtration rating: 10 µm) + Magnetic strainer (10000 gauss) | None | Filter (filtration rating: 20 µm) |
| Evaluation results | | Viscosity stability of slurry composition | B | B | B | c | B |
| | | Coatability of slurry composition | B | B | B | B | B |
| | | Low-temperature cycle characteristics of secondary battery | C | C | C | D | C |

It can be seen from Tables 1 and 2 that a slurry composition having excellent coatability can be produced and an electrode that can cause a secondary battery to display excellent low-temperature cycle characteristics can be formed through the binder compositions of Examples 1 to 5 with which in a situation in which the binder composition is filtered using a mesh filter having an opening size of 5 µm or more, the number of particles having a maximum diameter of not less than 5 µm and not more than 15 µm that are observed on the mesh filter after the filtration is not more than a specific value and the proportion of the number of particles having a maximum diameter of more than 15 µm relative to the total number of particles that are observed on the mesh filter after the filtration is also not more than a specific value.

In contrast, it can be seen that coatability of a produced slurry composition is poor and low-temperature cycle characteristics of a secondary battery are also poor when using the binder compositions of Comparative Examples 1 and 2 with which the number of particles having a maximum diameter of not less than 5 µm and not more than 15 µm that are observed on the mesh filter after the filtration is more than a specific value but the proportion of the number of particles having a maximum diameter of more than 15 µm relative to the total number of particles that are observed on the mesh filter after the filtration is not more than a specific value.

It can also be seen that coatability of a produced slurry composition is poor and low-temperature cycle characteristics of a secondary battery are also poor when using the binder composition of Comparative Example 3 with which the number of particles having a maximum diameter of not less than 5 µm and not more than 15 µm that are observed on the mesh filter after the filtration is not more than a specific value but the proportion of the number of particles having a maximum diameter of more than 15 µm relative to the total number of particles that are observed on the mesh filter after the filtration is more than a specific value.

It can also be seen that coatability of a produced slurry composition is poor and low-temperature cycle characteristics of a secondary battery are also poor when using the binder compositions of Comparative Examples 4 and 5 with which the number of particles having a maximum diameter of not less than 5 µm and not more than 15 µm that are observed on the mesh filter after the filtration is more than a specific value and the proportion of the number of particles having a maximum diameter of more than 15 µm relative to the total number of particles that are observed on the mesh filter after the filtration is also more than a specific value.

According to the present disclosure, it is possible to provide a binder composition for a non-aqueous secondary battery electrode that is capable of producing a slurry composition for a non-aqueous secondary battery electrode having excellent coatability and that is capable of forming an electrode for a non-aqueous secondary battery that can cause a non-aqueous secondary battery to display excellent low-temperature cycle characteristics.

Moreover, according to the present disclosure, it is possible to provide a slurry composition for a non-aqueous secondary battery electrode that has excellent coatability and that is capable of forming an electrode for a non-aqueous secondary battery that can cause a non-aqueous secondary battery to display excellent low-temperature cycle characteristics.

Furthermore, according to the present disclosure, it is possible to provide an electrode for a non-aqueous secondary battery that can cause a non-aqueous secondary battery to display excellent low-temperature cycle characteristics.

Also, according to the present disclosure, it is possible to provide a non-aqueous secondary battery that has excellent low-temperature cycle characteristics.

## Claims

1. A binder composition for a non-aqueous secondary battery electrode comprising a polymer and a solvent, wherein, in a situation in which the binder composition for a non-aqueous secondary battery electrode is subjected to filtration using a mesh filter having an opening size of 5 µm:
a number of particles having a maximum diameter of not less than 5 µm and not more than 15 µm that are observed on the mesh filter after the filtration is 2,000 particles/L or less; and
a proportion of a number of particles having a maximum diameter of more than 15 µm relative to a total number of particles that are observed on the mesh filter after the filtration is 40% or less.

2. The binder composition for a non-aqueous secondary battery electrode according to claim 1, wherein
a number of non-metal particles having a maximum diameter of not less than 5 µm and not more than 15 µm that are observed on the mesh filter after the filtration is 2,000 particles/L or less, and
a proportion of a number of non-metal particles having a maximum diameter of more than 15 µm relative to a total number of non-metal particles that are observed on the mesh filter after the filtration is 40% or less.

3. The binder composition for a non-aqueous secondary battery electrode according to claim 1, wherein the solvent includes water.

4. A slurry composition for a non-aqueous secondary battery electrode comprising: an electrode active material; and the binder composition for a non-aqueous secondary battery electrode according to any one of claims 1 to 3.

5. An electrode for a non-aqueous secondary battery comprising an electrode mixed material layer formed using the slurry composition for a non-aqueous secondary battery electrode according to claim 4.

6. A non-aqueous secondary battery comprising the electrode for a non-aqueous secondary battery according to claim 5.
